Europäisches Patentamt

European Patent Office

Office européen des brevets

(19)

(11) Veröffentlichungsnummer : **0 407 777 B1**

# (12) EUROPÄISCHE PATENTSCHRIFT

(45) Veröffentlichungstag der Patentschrift :
**02.02.94 Patentblatt 94/05**

(21) Anmeldenummer : **90111739.0**

(22) Anmeldetag : **21.06.90**

(51) Int. Cl.$^5$ : **F02D 31/00,** B60K 31/04,
B60K 31/16

(54) **Verfahren und Vorrichtung zur Fahrgeschwindigkeitsbegrenzung.**

(30) Priorität : **12.07.89 DE 3922946**

(43) Veröffentlichungstag der Anmeldung :
**16.01.91 Patentblatt 91/03**

(45) Bekanntmachung des Hinweises auf die
Patenterteilung :
**02.02.94 Patentblatt 94/05**

(84) Benannte Vertragsstaaten :
**DE FR GB**

(56) Entgegenhaltungen :
**DE-A- 3 712 588
US-A- 4 462 479
PATENT ABSTRACTS OF JAPAN Band 8, Nr.
96 (M-294)(1533),4. Mai 1984; & JP-A-59012145
(NISSAN) 21.01.1984**

(73) Patentinhaber : **ROBERT BOSCH GMBH
Postfach 30 02 20
D-70442 Stuttgart (DE)**

(72) Erfinder : **Bräuninger, Jürgen, Dipl.-Math
Spechtweg 15c
D-7000 Stuttgart 31 (DE)**
Erfinder : **Heck, Dieter, Dipl.-Ing.(FH)
Scheibbser Strasse 85
D-7255 Rutesheim (DE)**
Erfinder : **Wirz, Josef, Dipl.-Ing. (FH)
Gunterstrasse 14
D-7000 Stuttgart 1 (DE)**
Erfinder : **Seher, Dieter, Dr.-Ing.
Zabergäustrasse 10
D-7129 Ilsfeld (DE)**

EP 0 407 777 B1

## Beschreibung

### Stand der Technik

Die Erfindung geht aus von einem Verfahren nach dem Oberbegriff des Anspruchs 1 und einer Vorrichtung nach dem Oberbegriff des Anspruchs 3.

Es ist üblicherweise bekannt, bei Dieselbrennkraftmaschinen eine Fahrgeschwindigkeitsbegrenzung FGB vorzusehen, um den Dieselmotor in einem ökologisch und technisch sinnvollen Drehzahl/Kraftstoffmengenbereich betreiben zu können. Hierdurch werden zu hohe Geschwindigkeiten vermieden mit dem Ziel einer Verbrauchsökonomie oder der Beachtung gesetzlicher Vorschriften.

Hierzu ist üblicherweise ein Fahrgeschwindigkeitsgeber vorgesehen, der ein entsprechendes Fahrgeschwindigkeitssignal erzeugt und unter Einbeziehung weiterer Signale die Kraftstoffzuführung zum Motor unterbricht oder reduziert, wenn eine vorgegebene Schwelle der maximalen Geschwindigkeit überschritten wird siehe z.B. DE-A-3712588 oder JP-A-5912145). Als weiteres Signal aus dem Umfeld der Brennkraftmaschine wird hierzu üblicherweise ein vom Getriebe stammendes Signal benötigt, welches allerdings insofern Probleme aufwirft, als ein solches Signal mit der ebenfalls möglichen Bedeutung "Getriebeschalter in Neutralstellung" eine sonst übliche Fahrgeschwindigkeitsbegrenzung außer Kraft setzt.

Daher ist es nicht ausgeschlossen, daß durch eine entsprechende Manipulation in diesem Bereich, etwa am Kabelbaumstecker durch einfaches Kurzschließen des Getriebeschaltersignals eine Auswertung dieses Signals nur noch in dem vorgetäuschten Sinn möglich ist, daß der Zustand "Getriebeschalter in Neutralstellung" dem System signalisiert wird, was die Fahrgeschwindigkeitsbegrenzung außer Kraft setzt und daher zu möglichen gefährlichen Fahrsituationen, Gesetzesübertretungen, aber auch zu technischen Defekten führen kann.

Der Erfindung liegt daher die Aufgabe zugrunde, eine, soweit möglich, manipulationssichere Fahrgeschwindigkeitsbegrenzung zu schaffen, die darüber hinaus bei Ausfall des Fahrgeschwindigkeitssignals noch funktionsfähig bleibt.

### Vorteile der Erfindung

Die Erfindung löst diese Aufgabe mit den kennzeichnen den Merkmalen des Hauptanspruchs bzw. des Unteranspruchs 3 und hat den Vorteil, daß neben der angestrebten Manipulationssicherheit gegen willkürliche Eingriffe von außen die Funktionssicherheit auch bei Ausfall des Fahrgeschwindigkeitssignals erhalten bleibt, wobei als periphere Signale lediglich noch ein Kupplungssignal benötigt wird, welches bei den üblichen elektronischen Dieselregelungen (EDC-Systemen) auf jeden Fall ausgewertet wird.

Daher macht die vorliegende Erfindung auch die Anordnung eines zusätzlichen Steckerplatzes für das bisher erforderliche Getriebeschaltersignal am Steuergerät entbehrlich.

Außer diesem Kupplungssignal werden keine weiteren Signale mehr benötigt, die nicht ohnehin im Bereich des EDC-Steuergeräts vorhanden oder erforderlich sind, wobei ferner vorteilhaft ist, daß die durch die vorliegende Erfindung ermöglichte Fahrgeschwindigkeitsbegrenzung auch bei allen anderen denkbaren Fahrsituationen keine nachteiligen Beeinflussungen haben kann; so ist Zwischengas in jeder beliebigen Situation möglich; ferner ist ein Anfahren am Berg auch bei ausgefallenem Fahrgeschwindigkeitssignal problemlos gewährleistet.

Durch die in den Unteransprüchen aufgeführten Maßnahmen sind vorteilhafte Weiterbildungen und Verbesserungen der Erfindung möglich. Besonders vorteilhaft ist die gleichzeitige Auswertung der im Moment des Auftretens des Kupplungssignals der Dieselbrennkraftmaschine zugeführten Einspritzmenge und Vergleich mit einem Schwellenwert, so daß festgestellt werden kann, ob ein Schaltvorgang vorliegt, bei dem bestimmte Überdrehzahlen und Überschreitungen von Geschwindigkeitsgrenzwerten durchaus auftreten können, oder nicht. Je nach Ergebnis reagiert die Erfindung unterschiedlich.

### Zeichnung

Ein Ausführungsbeispiel der Erfindung ist in der Zeichnung dargestellt und wird in der nachfolgenden Beschreibung näher erläutert. Es zeigen:

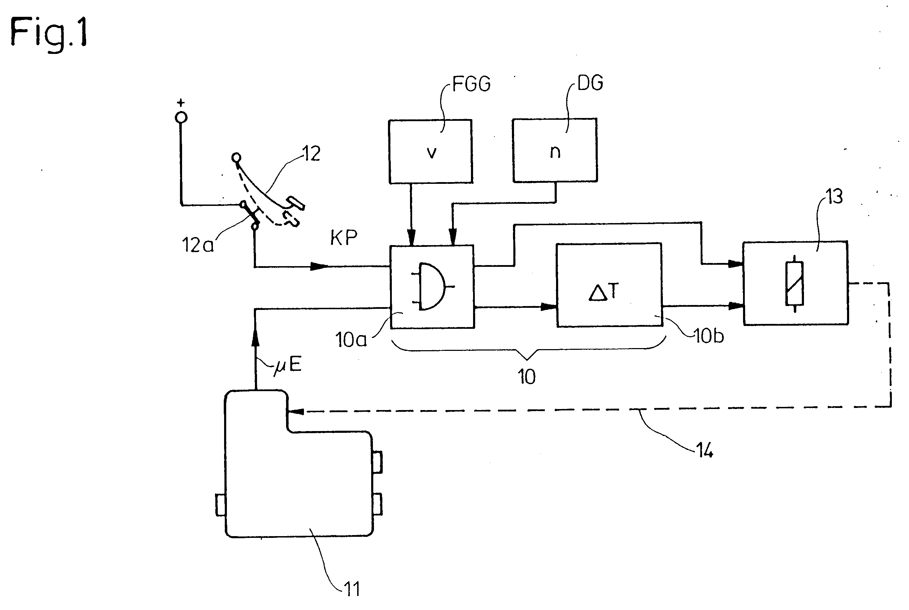

Fig. 1    stark schematisiert und zum erleichterten Verständnis der Erfindung eine analoge Möglichkeit zur Fahrgeschwindigkeitsbegrenzung und

Fig. 2    ein Flußdiagramm zur Fahrgeschwindigkeitsbegrenzung.

Beschreibung der Ausführungsbeispiele

Der Grundgedanke vorliegender Erfindung besteht darin, je nach der Entscheidung, ob ein Fahrgeschwindigkeitssignal verfügbar ist oder nicht, entweder mit Bezug auf die maximale Geschwindigkeit oder die maximale Drehzahl zu begrenzen, wobei stets berücksichtigt wird, ob zu diesem Moment eine Getriebebetätigung stattfindet, also ob der Fahrer das Kupplungpedal getreten und die zugeführte (Kraftstoff)Menge entsprechend reduziert wird (Lastabfall). Dem Fahrer steht dann im Fall der Getriebebetätigung eine zusätzliche Zeitdauer zur Verfügung, um Zwischengas geben zu können, ohne daß die Begrenzungswirkung einsetzt.

Bevor auf die Erfindung im folgenden eingegangen wird, wird darauf aufmerksam gemacht, daß das in der Zeichnung dargestellte, die Erfindung anhand diskreter Schaltstufen oder Wirkungsstufen angebende Blockschaltbild diese nicht einschränkt, sondern dazu dient, die funktionellen Grundwirkungen der Erfindung zu veranschaulichen und spezielle Funktionsabläufe anzugeben. Es versteht sich, daß die einzelnen Bausteine und Blöcke in analoger, vollkommen digitaler oder auch hybrider Technik aufgebaut sein können oder auch, wie bei vorliegender Erfindung bevorzugt, ganz oder teilweise zusammengefaßt entsprechende Bereiche von programmgesteuerten digitalen Systemen, beispielsweise also Mikroprozessor, Mikrorechner u. dgl. umfassen und belegen können. Bevorzugt ist, wie auch das im folgenden angegebene Flußdiagramm verdeutlicht, die vorliegende Erfindung mit ihren verschiedenen externen Sensoren und ihrer technischen Wirkung im Zeitablauf eines Programms eines EDC-Systems niedergelegt.

Entsprechend der Zeichnung ist eine elektronische Logikschaltung, ein Mikroprozessor oder ein Rechner 10 vorgesehen, dem von einem Fahrgeschwindigkeitsgeber FGG ein Geschwindigkeitssignal v und von einem Drehzahlgeber DG ein Drehzahlsignal n der Brennkraftmaschine zugeführt wird. Ferner wird der zentralen Logikschaltung ein Einspritzmengensignal ME, beispielsweise aus dem Bereich der bei 11 dargestellten Dieselkraftstoffpumpe sowie ein Kupplungssignal KP aus dem Bereich des Kupplungspedals 12 mit entsprechend zugeordnetem Schalter 12a zugeführt.

Die Logikschaltung 10 umfaßt erste Schaltmittel 10a, die nach Art einer UND-Funktion die beiden Signale KP (Kupplung betätigt) und das Einspritzmengensignal ME zusammenfaßt. Je nachdem, ob ein Fahrgeschwindigkeitsgebersignal als Geschwindigkeitssignal v verfügbar ist oder mit dem Drehzahlsignal n gearbeitet werden muß, entscheidet die Logikschaltung 10 bei Überschreiten der Bedingungen $v > v_{max}$ bzw. $n > n_{max}$, ob für die Getriebebetätigung einschließlich Zwischengas eine zusätzliche Zeitdauer zur Verfügung zu stellen ist, bis abgeregelt oder nicht eingegriffen wird, also die zugeführte Einspritzmenge reduziert wird, wozu ein nachgeschaltetes Zeitglied 10b vorgesehen ist. Ein Abregelungsbefehl ergeht an ein schematisch bei 13 dargestelltes Ausgangsstellglied und wirkt, wie die gestrichelte Verbindungsleitung 14 angibt, auf die Dieseleinspritzpumpe 11 zurück.

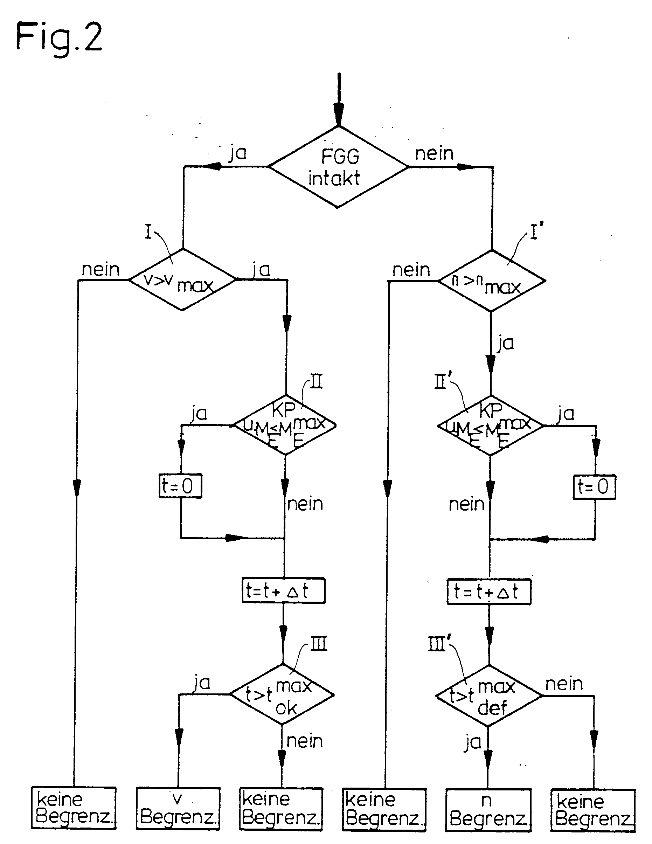

Die durch die Erfindung ermöglichte Funktion läuft im einzelnen so ab, wie durch das in Fig. 2 angegebene Flußdiagramms beschrieben.

Bei diesem Flußdiagramm lassen sich die folgenden Fälle unterscheiden:

1. Bei intaktem Fahrgeschwindigkeitsgeber ist ein Fahrgeschwindigkeitssignal vorhanden; dann tritt der linke Zweig des Flußdiagramms in Funktion und es wird am Funktionsblock I überprüft, ob die Höchstgeschwindigkeit $v_{max}$ überschritten ist. Ist dies der Fall, dann muß berücksichtigt werden, ob der Fahrer zu diesem Zeitpunkt das Getriebe zurückschalten möchte; z diesem Zweck ist ein Entscheidungsblock II vorgesehen, an welchem erkannt wird, ob ein Kupplungssignal KP vorliegt und gleichzeitig die zugeführte Menge $M_E$ reduziert wird, also $M_E < M_E^{max}$. Falls das Getriebe zurückgeschaltet wird, wird an einem weiteren Funktionsblock III festgestellt, ob bei intaktem Fahrgeschwindigkeitsgeber eine vorgegebene Wartezeit $t_{ok}^{max}$ vergangen ist. Diese Zeit wird dem Fahrer zur Verfügung gestellt, um Zwischengas zu geben. Bei Überschreitung dieser Zeitdauer erfolgt Begrenzung, wird die Zeitdauer nicht überschritten, dann wird nicht begrenzt.

Für den Fall, daß bei Übergeschwindigkeit die Kupplung ohne Zwischengas betätigt wird, sorgt in der üblichen Weise ein vorgesehener Leerlaufregler dafür, daß der Motor nicht ausgeht.

2. Ist ein Fahrgeschwindigkeitssignal nicht vorhanden, weil der Fahrgeschwindigkeitsgeber defekt ist, dann liegen im Grunde die gleichen Funktionsblöcke im rechten Zweig des Flußdiagramms vor, jedoch mit der Ausnahme, daß nunmehr statt der Geschwindigkeit die Drehzahl n begrenzt wird, und mit der Maßgabe, daß die hier vorgesehene Wartezeit $t_{def}^{max}$ in diesem Fall größer gewählt wird oder werden kann, um zusätzlich ein reibungsloses Anfahren am Berg zu ermöglichen. Ein solches Anfahren am Berg kann ja nur bei intaktem Fahrgeschwindigkeitsgeber erkannt werden, während dann, wenn nur auf das Drehzahlsignal n abgestellt wird, durch starkes Gasgeben durchaus im Stillstand die Maximaldrehzahl $n_{max}$ überschritten werden kann.

Im folgenden werden noch die in dem Flußdiagramm aufgenommenen Größen definiert:

$v_{max}$ = erlaubte Höchstgeschwindigkeit

$n_{max}$ = Drehzahl, bei der im höchsten Gang $v_{max}$ erreicht wird

$M_E^{max}$ = Einspritzmenge, die vor Zwischengas zu unterschreiten ist

$t_{ok}^{max}$ = Wartezeit, wenn FGG intakt

$t_{def}^{max}$ = Wartezeit, wenn FGG defekt

FGG = Fahrgeschwindigkeitsgeber

KP = Kupplung wird betätigt

**Patentansprüche**

1. Verfahren zur Fahrgeschwindigkeitsbegrenzung bei elektrisch gesteuerten oder geregelten Dieselbrennkraftmaschinen (EDC), dadurch gekennzeichnet, daß

   a) bei funktionsfähigem Fahrgeschwindigkeitsgeber (FGG) das überschreiten einer Höchstgeschwindigkeit (V > Vmax) festgestellt wird

   b) ein Kupplungssignal (KP), das anzeigt, daß die Kupplung betätigt ist, zusammen mit einem Einspritzmengensignal (ME), das anzeigt, daß die Einspritzmenge unter einer vorgegebenen Einspritzmenge ($M_{Emax}$) reduziert wird, ausgewertet wird und

   c) bei betätigter Kupplung und reduzierter Einspritzmenge eine eine Zwischengasgabe ermöglichende zusätzliche Zeitverzögerung ($t_{ok}^{max}$) abgewartet wird und

   d) erst nach deren Ablauf und weiterem Vorliegen der Geschwindigkeitsüberschreitung eine Einspritzmengenreduktion vorgenommen wird, während

   e) bei defektem Fahrgeschwindigkeitsgeber (FGG) das Überschreiten einer Höchstdrehzahl (n > $n_{max}$) festgestellt und anschließend in gleicher Weise nach den Punkten b), c) und d) verfahren wird.

2. Verfahren nach Anspruch 1, dadurch gekennzeichnet, daß im Falle eines defekten Fahrgeschwindigkeitsgebers (FGG) die zusätzliche Zeitverzögerung ($t_{def}^{max}$) als Wartezeit größer als die Zeitverzögerung bei intaktem Fahrgeschwindigkeitsgeber gewählt wird, um auch ein reibungsloses Anfahren am Berg zu ermöglichen.

3. Vorrichtung zur Fahrgeschwindigkeitsbegrenzung bei elektronisch gesteuerten oder geregelten Dieselbrennkraftmaschinen (EDC) zur Durchführung des Verfahrens nach Anspruch 1 oder 2, dadurch gekennzeichnet, daß ein Kupplungssignalgeber vorgesehen und dessen Kupplungssignal (KP) zusammen mit einem Einspritzmengensignal (ME) von einer logischen Steuerschaltung (10) ausgewertet wird, daß der logischen Steuerschaltung von den äußeren Sensoren Fahrgeschwindigkeitsgeber (SGG) und Drehzahlgeber (DG) ein Fahrgeschwindigkeitssignal (v) und ein Drehzahlsignal (n) zugeführt sind, daß eine Vergleichschaltung (10a) das gleichzeitige Vorliegen des Kupplungssignals, das anzeigt, daß die Kupplung betätigt wird, und des Einspritzmengensignals, das anzeigt, daß die Einspritzmenge unter einer vorgegebenen Einspritzmenge ($M_{Emax}$) reduziert wird, auswertet und in Verbindung mit dem Überschreiten einer Fahrgeschwindigkeits-, oder bei defektem Fahrgeschwindigkeitsgeber (FGG), einer Drehzahlschwelle durch das zugeführte Fahrgeschwindigkeits-(v) oder Drehzahlsignal (n) eine nachgeschaltete Zeitverzögerungsschaltung (10b) zur Mengenreduzierung der eingespritzten Kraftstoffmenge dann ansteuert, wenn die vorgegebene Zeitverzögerung ($t_{ok}^{max}$;$t_{def}^{max}$) überschritten ist.

**Claims**

1. Method for travelling-speed limitation with electrically [sic] controlled or regulated diesel internal combustion engines (EDC), characterized in that

   a) where the travelling-speed transmitter (FGG) is functional, the exceeding of a maximum speed (v > vmax) is detected,

   b) a clutch signal (KP) which indicates that the clutch has been actuated, together with an injection-quantity signal (ME) which indicates that the injection quantity is reduced below a predetermined injection quantity ($M_{Emax}$), is evaluated and

   c) if the clutch has been actuated and the injection quantity reduced, the system waits for an additional time delay ($t_{ok}^{max}$) which allows an intermediate acceleration and

   d) only after the expiry of this delay and if the speed continues to be exceeded is an injection quantity

4

reduction carried out, whereas

e) if the travelling-speed transmitter (FGG) is defective, the exceeding of a maximum engine speed (n > $n_{max}$) is detected and the procedure is then as under points b), c) and d).

2. Method according to Claim 1, characterized in that, if the travelling-speed transmitter (FGG) is defective, the additional time delay ($t_{def}^{max}$) as the waiting time is chosen to be greater than the time delay when the travelling-speed transmitter is intact in order also to allow smooth hill starting.

3. Apparatus for travelling-speed limitation with electronically controlled or regulated diesel internal combustion engines (EDC), for carrying out the method according to Claim 1 or 2, characterized in that a clutch-signal transmitter is provided and its clutch signal (KP) is evaluated together with an injection-quantity signal (ME) by a logic circuit (10), in that the logic circuit is supplied by the external sensors - a travelling-speed transmitter (SGG) and an engine-speed transmitter (DG) - with a travelling-speed singal [sic] (v) and an engine-speed signal (n), in that a comparison circuit (10a) evaluates the simultaneous presence of the clutch signal, which indicates that the clutch is being actuated, and of the injection-quantity signal, which indicates that the injection quantity is being reduced below a predetermined injection quantity ($M_{Emax}$), and, if a travelling-speed threshold or, if the travelling-speed transmitter (FGG) is defective, an engine-speed threshold is exceeded by the travelling-speed signal (v) or engine-speed signal (n), activates an output-side time-delay circuit (10b) in order to reduce the fuel quantity injected when the predetermined time delay ($t_{ok}^{max}$;$t_{def}^{max}$) is exceeded.

## Revendications

1. Procédé de limitation de la vitesse de marche d'un véhicule dans le cas d'un moteur à combustion interne de type Diesel (EDC) commandé ou réglé électriquement, caractérisé en ce que :

a) dans le cas où le détecteur de la vitesse de marche (FGG) est en état de fonctionner on détermine le franchissement d'une vitesse maximale (V > $V_{max}$)

b) un signal d'embrayage (KP), qui indique que l'embrayage est actionné, en même temps qu'un signal de quantité de carburant injectée (ME) qui indique que la quantité injectée tombe en-dessous d'une quantité injectée prédéfinie ($M_{max}$), est exploité,

c) dans le cas où l'embrayage est actionné et où la quantité injectée est réduite, on dispose d'une temporisation supplémentaire permettant d'effectuer un double débrayage et,

d) seulement après son écoulement et s'il existe un autre dépassement de vitesse, on opère une réduction de la quantité injectée tandis que,

e) dans le cas où le détecteur de la vitesse de marche du véhicule (FGG) est défectueux, on détermine le franchissement d'une vitesse de rotation maximale du moteur (n > $n_{max}$) et ensuite on procède de la même manière qu'aux points b), c) et d).

2. Procédé selon la revendication 1, caractérisé en ce que dans le cas où le détecteur de la vitesse de marche du véhicule (FGG) est défectueux, on choisit la temporisation additionnelle ($t_{def}^{max}$) comme temps d'attente plus grand que la temporisation dans le cas où le détecteur de la vitesse de marche du véhicule est intact, pour permettre également un démarrage en côte sans patinage.

3. Dispositif pour limiter la vitesse de marche d'un véhicule dans le cas de moteurs à combustion interne de type Diesel (EDC) commandés ou réglés électroniquement, pour la mise en oeuvre du procédé selon la revendication 1 ou 2, caractérisé en ce que l'on prévoit un détecteur de signal d'embrayage et l'on exploite son signal d'embrayage (KP), en même temps qu'un signal de quantité de carburant injecté (ME) dans un circuit logique de commande (10), en ce qu'au circuit logique de commande on envoie à partir des détecteurs extérieurs, le détecteur de la vitesse de marche du véhicule (SGG) et le détecteur de la vitesse de rotation du moteur (DG), un signal (v) de vitesse de marche du véhicule et un signal de vitesse de rotation du moteur (n), en ce qu'un circuit de comparaison (10a) exploite l'existence simultanée du signal d'embrayage, qui indique que l'embrayage est actionné, et du signal de quantité injectée, qui indique que cette quantité tombe en-dessous d'une quantité injectée prédéfinie ($ME_{max}$) et en ce qu'en liaison avec le dépassement d'un seuil de vitesse de marche (v) ou d'un seuil de vitesse de rotation (n) dans le cas où le détecteur de la vitesse de marche du véhicule (FGG) est défectueux, on déclenche un circuit de temporisation monté en aval (10b) pour réduire la quantité de carburant injectée, quand la temporisation prédéfinie ($t_{ok}^{max}$ ; $t_{def}^{max}$) est dépassée.

# Fig.1

EP 0 407 777 B1

# Fig.2